# EUROPEAN PATENT SPECIFICATION

(11) **EP 3 698 579 B1**
(45) Date of publication and mention of the grant of the patent: **01.12.2021**
(21) Application number: 18788761.7
(22) Date of filing: 17.10.2018
(51) Int. Cl.: H04W 48/16

(54) **SYSTEM FOR MONITORING THE USAGE OF A MOBILE COMMUNICATION DEVICE**
SYSTEM ZUR ÜBERWACHUNG DER NUTZUNG EINER MOBILEN KOMMUNIKATIONSVORRICHTUNG
SYSTÈME PERMETTANT DE SURVEILLER L'UTILISATION D'UN DISPOSITIF DE COMMUNICATION MOBILE

(30) Priority: 17.10.2017 GB 201717045
(43) Date of publication of application: 26.08.2020
(73) Proprietor: Bluesona Limited, Downpatrick, Down BT30 8NE (GB)
(72) Inventor: MORRISON, Mel, Downpatrick Down BT30 8NE (GB)
(74) Representative: FRKelly
(86) International application number: PCT/EP2018/078449
(87) International publication number: WO 2019/076998

(56) References cited:
- EP-A1- 2 824 894
- WO-A1-2010/081544
- WO-A2-2015/008290
- US-A1- 2016 142 213

## Description

### Field of the Invention

This invention relates to a system for system for monitoring the usage of a mobile communication device and in particular to a system which is operable to control one or more features of a mobile communication device and monitor the usage of the mobile communication device.

### Background to the Invention

Mobile communication devices such as smartphones, tablets, smartwatches and laptops have become an essential component of day to day life for the vast majority of people around the world. A result of this uptake in mobile devices is that people are constantly switched on to the global communications network; this has provided a great number of benefits, however, it has also created a number of problems. One of the most significant of these problems is, that by having constant access to the internet it has made it very difficult for people to "switch off" i.e. not immediately react to emails, instant messages or notifications at any time of the day. This problem is particularly prevalent whilst driving, where a driver is expected to focus their total attention upon the road and their surroundings, however with smartphones alerting the driver with sounds, vibrations and even lights when receiving a new message or the like, it can be difficult for a driver not to pick up their phone to view the incoming communication while in transit. This behaviour is becoming more and more common and poses a significant risk to public safety as a distracted driver is not entirely focused on the road leading to a greater number of auto related accidents.

However it is not only in vehicles that new problems have presented themselves, in office environments for example, workers which are supposed to be directing their attention to the work at hand are commonly distracted by their smartphones leading to a loss of productivity and efficiency which can be difficult for a manager to monitor. A further environment where such problems have also arisen is in the home, where children and young adults can struggle to divert their attention away from their mobile devices. This can distract children from pursuing studies or hobbies and can be difficult for parents or guardians to monitor as mobile devices have become such an everyday feature of modern life.

WO2015/008290 discloses a method and system are disclosed for operating a communication device to assist in safe driving of a vehicle.

Therefore there exits a need to address the problems highlighted above and in particular to provide means by which an element of control can be exerted over mobile communication devices when in certain environments and where the usage of the devices in these environments can be monitored. It is a desire of the present invention to obviate or mitigate the problems highlighted above.

### Summary of the Invention

The present invention is defined in the appended independent claims to which reference should be made. Advantageous features are set out in the appended dependent claims.

### Brief Description of the drawings

The invention will now be described by way of example with reference to the accompanying drawings, in which like numerals are used to denote like parts, in which:

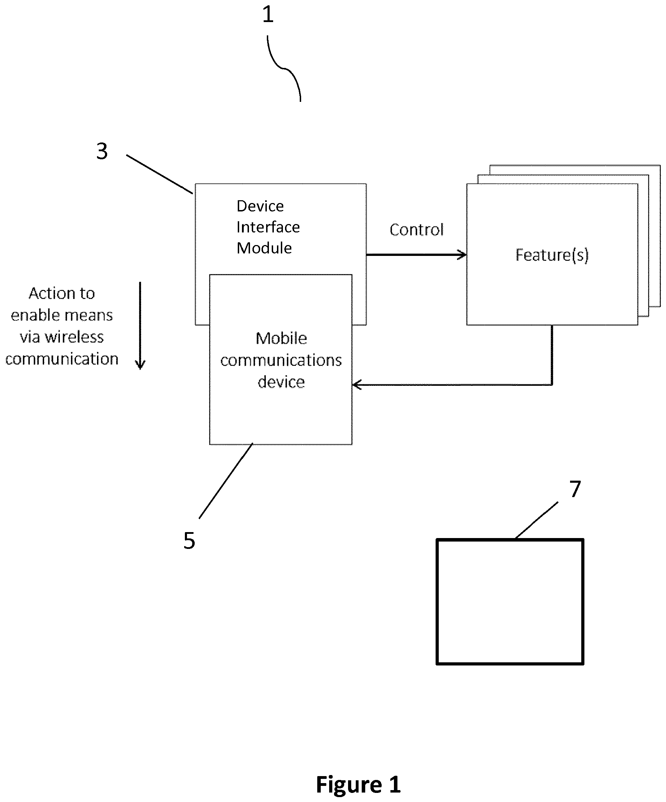

Figure 1 is a diagram illustrating a system for monitoring the usage of a mobile communication device;
Figure 2 is a front perspective view of an initialisation means;
Figure 3 is a front perspective view of the initialisation means showing a mobile communication device being inserted therein;
Figure 4 is a front perspective view of the initialisation means showing the mobile communication device received therein; and
Figure 5 is a rear perspective view of the initialisation means showing an attachment means for mounting the initialisation means on a surface.

### Detailed description of the drawings

Referring to the drawings there is shown, generally indicated by the reference numeral 1, a diagram embodying a first aspect of the invention and in particular showing a system for monitoring the usage of a mobile communication device. The system 1 comprises an initialisation means 3, a mobile communication device 5 and a monitoring device 7. The system further comprises a controller which is configured to control one or more features of the mobile communication device 5, wherein controlling the one or more features of the mobile communication device 5 may comprise enabling, disabling or restricting one or more of the features of the mobile communication device. To this end the controller preferably comprise a pre-installed application which is stored upon the mobile communications device 5. Typically the one or more features of the mobile communication device may comprise hardware features or components including but not limited to satellite navigation modules such as GPS, GLONASS or the like, camera, wireless communication module e.g. Bluetooth^{®} module, NFC (Near Field Communication) module, Wi-Fi^{®} module or GSM, microphone, display, I/O device e.g. keyboard, transceiver or any other hardware feature common to a typical mobile communication device 5. Alternatively or additionally, the one or more features may comprise one or more software features such as one or more other pre-installed software applications or functions. The mobile communication device 5 preferably comprises a smartphone however it may alternatively comprise any other suitable mobile communication device such as a tablet or laptop or smartwatch but to name a few.

The controller, ideally comprising the pre-installed application stored upon the mobile communication device 5 typically comprises pre-programmed instructions which are configured to control the one or more features of the mobile communication device 5. To this end the mobile communications device 5 is configured to initialise or activate the pre-installed application in response to a wireless communication between the mobile communication device 5 and the initialisation means 3 when the mobile communication device 5 comes within a pre-determined range of the initialisation means 3. The pre-determined range corresponding to the range of the means of wireless communication used for communication between the initialisation means 3 and the mobile communication device 5, accordingly the pre-determined range will vary depending on the means of wireless communication being implemented. The wireless communication may be a continuous communication or an intermittent communication, for example, the initialisation means 3 and/or mobile communication device 5 may be configured to establish communications with respect to one another at pre-set intervals. To facilitate the features described above the initialisation means 3 preferably comprises a wireless communication means (not shown), preferably a short-range wireless communication means which may comprise a Bluetooth^{®}, Wi-Fi^{®} or NFC module which is operable to establish wireless communication with a corresponding wireless communication means of the mobile communication device 5. The term short range wireless communication is intended to mean the wireless communication means ideally has a maximum range of approximately 100 metres. Preferably the wireless communication means comprises Near Field Communication (NFC) wherein the range comprises approximately 4 cm. Alternatively, the pre-installed application, upon initialisation may be configured such that the mobile communication device 5 communicates with a monitoring device 7 and/or the initialisation means 3 to obtain and/or modify instructions. For example upon initialisation of the pre-installed application the mobile communication device 5 may be configured to communicate with a monitoring device 7 and/or initialisation means 3 to obtain instructions and/or update and/or modify pre-installed instructions. Alternatively the initialisation means 3 may be configured to initialise or activate the pre-installed application upon the mobile communications device 5 in response to a wired connection between the initialisation means 3 and the mobile communication device 5.

The mobile communication device 5 is configured to detect the presence of the initialisation means 3 when the mobile communication device 5 adopts a position within range of the wireless communication means of the initialisation means 3. The mobile communication device 5 is subsequently configured to activate the controller when the initialisation means 3 is detected by the mobile communication device 5 and determine whether one or more conditions are met when the mobile communication device 5 is removed from within the range of the initialisation means. The mobile communication device 5 is further configured to communicate with the monitoring means 7 when the mobile communication device 5 is removed from within the range of the initialisation means 3 and the one or more conditions are met. It should be understood that the term "activate the controller" is intended to mean that the operating state of the controller is altered from an off or deactivated state to an on or activated state, wherein in the activated stated the controller is operable to control the one or more features of the mobile communication device 5.

The mobile communication device 5 is configured to communicate with the initialisation means 3 and/or the monitoring device 7 at least when the mobile communication device 5 is removed from within the pre-determined range of the initialisation means 3 when one or more pre-determined conditions are fulfilled. The communication may include information particular to the mobile communications device 5 and/or situational information such as time, date, location, speed etc. The one or more pre-determined conditions may comprise the presence of one or more measurements obtained by a sensor or sensors present on the mobile communication device 5. For example the one or more pre-determined conditions may comprise locational information obtained by the mobile communication device 5 such as by a GPS or other satellite navigation module, additionally or alternatively the pre-determined condition may comprise the current velocity of the mobile communication device 5 as measured by an accelerometer and/or GPS module or the like. Further additionally or alternatively the pre-determined condition may comprise a pre-set time, or time range. For example the pre-determined condition may comprise a time range of between 9 am and 5 pm such that if the mobile communication device 5 is removed from within the range of the initialisation means 3 within that time period the mobile communication device 5 is configured to communicate with the initialisation means 3 and/or a monitoring device 7. The pre-determined conditions are preferably stored as part of the pre-installed application on a computer readable medium of the mobile communication device 5, additionally or alternatively the pre-determined conditions may be stored on the initialisation means 3 and/or the monitoring device 7. Ideally the pre-determined conditions may be altered by the monitoring device 7 and/or initialisation means 3 and communicated, typically via wired or wireless communication means, to the mobile communication device 5 which is operable to update and/or modify the predetermined conditions stored thereon accordingly. Alternatively the mobile communication device 5 is configured to communicate with the initialisation means 3 and/or the monitoring device 7 at least when the mobile communication device 5 is disconnected from the wired connection with the initialisation means 3 when one or more pre-determined conditions are fulfilled.

The monitoring device 7 is typically located remote from the initialisation means 3, wherein remote may mean at least outside of the range of the interface module 3 within which the mobile communication device 5 is operable to establish wireless communication with the initialisation means 3. Typically the mobile communication device 5 and monitoring device 7 may communicate with one another over the cellular network. Preferably the mobile communication device 5 is configured to communicate with the monitoring device 7 when the mobile communication device 5 is removed from within the pre-determined range of the initialisation means 3 when the one or more pre-determined conditions are fulfilled. The monitoring device 7 may comprise a smartphone or personal computer or laptop or smartphone or smartwatch or any other suitable computing device operable to establish a communication with the mobile communication device 5.

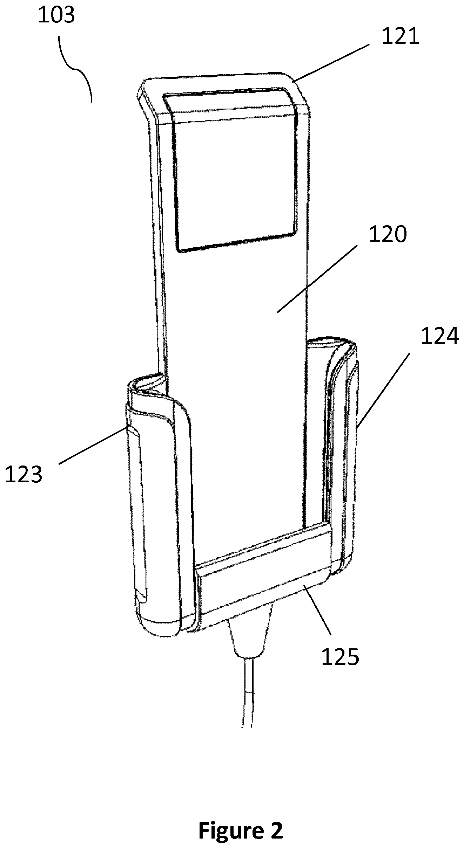

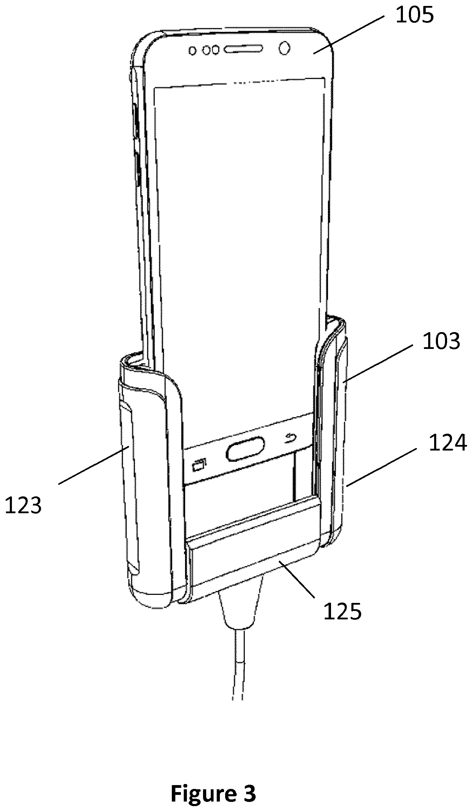

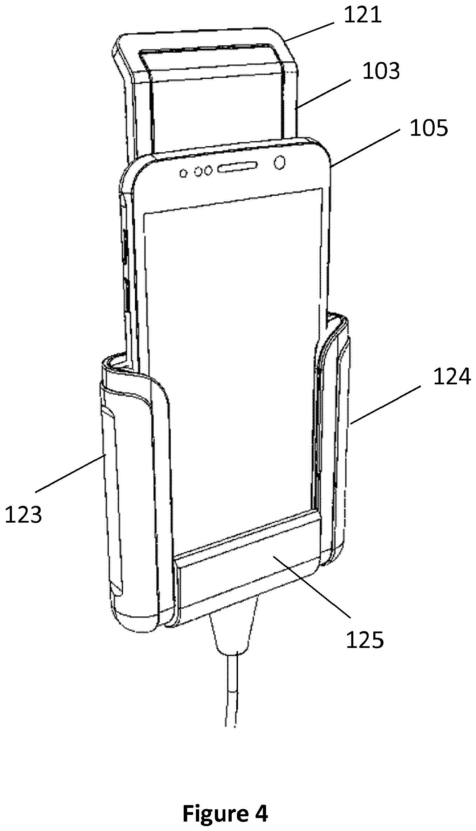

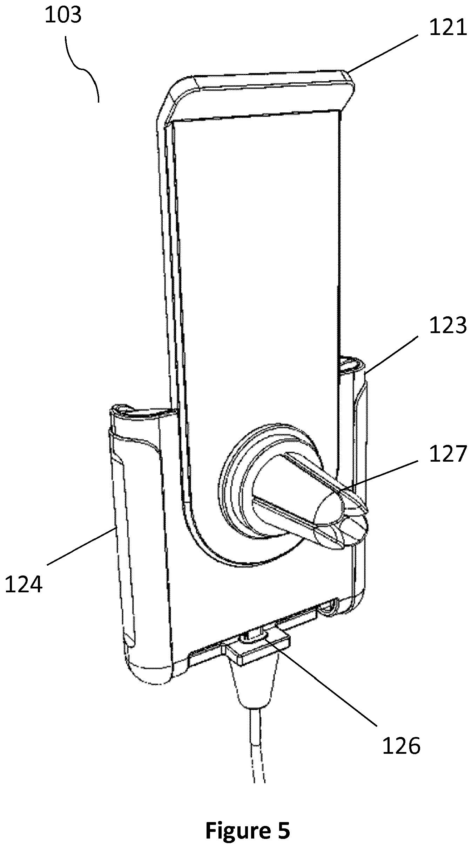

A preferred embodiment of the invention is shown in figures 2 to 5. In this embodiment the initialisation means 103 comprises a holder for receiving and retaining the mobile communication device 105 such as those that may be releasably mounted upon a vehicle dashboard, windscreen, air vent or other suitable surface within a vehicle in-use. Ideally the mobile communication device 105 in this embodiment comprises a smartphone or tablet. It should be understood that in the ensuing, the use of the term "forward direction" is intended to mean the forward direction of the vehicle in which the holder 103 is mounted in-use with the term "rearward direction" being the opposing direction wherein the holder 103 is arranged such that the display of the mobile communication device 105 faces towards the vehicle occupant when located in the holder 103 in-use. The holder 103 ideally comprises a rear wall 120 from which first and second side walls 123, 124 and a base wall 125 may extend outwardly therefrom, wherein the walls 120, 123, 124 and 125 define a slot suitable for receiving and holding a mobile communication device 105 securely therein, particularly when a vehicle is in transit. To facilitate easy insertion of the mobile communication device 105 into the holder 103 the side walls 123, 124 preferably extend, substantially parallel relative to one another, along an axis which is substantially perpendicular relative to the rear wall 120 whilst the base wall 125 typically extends between the first and second side walls 123, 124 along a axis which is perpendicular to both of the first and second side walls 123, 124. Ideally each of the first and second side walls 123, 124 and/or base wall 125 may be curved such as to accommodate mobile communication devices 105 of varying dimensions. Optionally the side walls 123, 124 may be configured to extend outward and away from the rear wall 120 along a horizontal axis typically using a resiliently biased rail arrangement or the like, such that the holder 103 can accommodate large mobile communications devices 105.

Additionally the upper end region 121 of the rear wall 120 may be obliquely disposed relative to the remainder of the rear wall 120 to define the mouth of the slot, to this end the upper end region 121 of the rear wall 120 may extend in the forward direction relative to the remainder of the rear wall 120. Ideally, the holder 103 is shaped such that when a mobile communications device is received and retained therein, one or more buttons of the mobile communications device 105 are covered by one or more walls of the holder 103. To this end the side walls 123, 124 and base wall 125 are ideally arranged such that when a mobile communication device 105 is located within the holder 103 that a portion of the side and/or base walls 123, 124, 125 extends over at least the lower portion of the front face of the mobile communication device 105 as typically this is where the physical or software buttons are located on the vast majority of mobile communication devices 105. It should be understood that the the "front face" is the face of the mobile communication device 105 which comprises a visual display, which when retained in the holder 103 will face in the rearward direction defined previously. Additionally the side walls 123, 124 may extend along the length of the rear wall 120 of the holder 103 to such an extent that any buttons located upon the sides of the mobile communication device 105 are covered when the mobile communication device 105 is retained within the holder 103. Alternatively, as is shown in figures 2 to 5, the side walls 123, 125 may extend along the length of the rear wall 120 to an extent such as to only partially cover the sides of the mobile communication device 105. Advantageously the holder 103, by covering the buttons of the mobile communication device 105, aids in preventing a driver of the vehicle from interacting with the mobile communication device 105 whilst in transit. Optionally, the interior faces of any of the rear, side or base walls 120, 123, 124, 125 may further include a padding layer (not shown) which is operable to provide cushioning between the walls and the mobile communication device 105 such as to prevent the mobile communication device 105 moving around within the holder when the vehicle is in transit in-use. Ideally the padding layer may comprise a foam layer or any other suitable padding or cushioning surface.

The holder 103 typically further comprises an attachment means 127, typically located upon the rear wall 121, which is operable to mount or couple the holder upon a vehicle surface such as a vehicle dashboard, windscreen, air vent or other suitable surface. In the embodiment shown in figures 2 to 5 the attachment means comprises a plurality of limbs which are shaped such as to form a releasable engagement with one or more shutters of a vehicle air vent however it may alternatively comprise a magnetic or suction attachment arrangement. One or more of the walls 120, 123, 124, 125 may be shaped such as to include an aperture 126 through which a cable, such as a charging cable, can be inserted such as to electrically couple the mobile communication device 105 to the vehicle for at least the purposes of charging however it may also facilitate data transfer between the mobile communication device 105 and the vehicle, typically including any telematics devices or the like of the vehicle. Ideally the base wall 125 includes an aperture through which a data transfer and/or power supply cable may be inserted such as to electrically couple the mobile communication device 105 to the initialisation means 103 or the vehicle. Additionally the initialisation means 103 may include wireless charging means (not shown), typically an inductive charging means. The wireless charging means may be incorporated within the rear wall 120 of the initialisation means 103 such that the mobile communications device 105, when it is received therein, is ideally positioned for wireless charging. In an alternative embodiment the mobile communication device 105 may be electrically coupled to the holder 103 such that the mobile communication device 105 must be removed from within the pre-determined range and disconnected from the initialisation means 103 before the mobile communication device 105 will communicate with the monitoring device 7 when the one or more conditions are fulfilled.

Preferably in the embodiment shown in figures 2 to 5 the holder 103 comprises a wireless communication means which preferably comprises a NFC module (not shown) which is included within the holder 103 such as to be operable to communicate with the mobile communication device 105 when it is received in the holder 103. The NFC module ideally comprises a passive NFC tag or the like. The NFC module is typically pre-programmed with a unique identifier which the mobile communications device 105 is operable to read. Upon the mobile communication device 105 coming within range of the NFC module of the initialisation means 103 such as to establish an NFC communication, the mobile communication device 105 is configured to run a pre-installed software application preferably upon detection of the unique identifier. The NFC module may be additionally configured to provide wireless charging functionality. The pre-installed software application is preferably configured to present a more limited feature set to a user upon initialisation for example the application may present a more limited graphical user interface (GUI) to the user which provides digital buttons corresponding only to features which are currently enabled and to enable, restrict or disable one or more features of the mobile communication device 105 in accordance with instructions of the pre-installed software application.

In-use the initialisation means 103 comprising the holder may be mounted upon a vehicle surface within easy reach of the vehicle driver. The holder ideally includes an NFC module incorporated within the holder 103 body, typically within the rear wall 120 of the holder. Prior to the driver commencing driving they can place their mobile communication device 105, typically comprising a smartphone 105 into the holder 103. Upon the smartphone 105 being placed in the holder 103 the smartphone 105 will be within range of the NFC module. Upon communication between the smartphone and the holder by NFC, wherein the NFC module comprises the unique identifier, the smartphone 105 being operable to interrogate the NFC module and upon detection of the identifier is configured to initialise the controller comprising the pre-installed application. The pre-installed application containing pre-installed instructions which are directed towards enabling, disabling or restricting one more features of the mobile device 105 or additionally or alternatively upon initialisation the application may be configured to instruct the smartphone 105 to obtain, verify and/or update instructions by communicating using a wireless communication means, such as Wi-Fi or cellular network, with the monitoring device 7 or another suitable device. Upon initialisation of the application the smartphone 105 may restrict or enable certain features in accordance with the instructions of the pre-installed application. For example the instructions may comprise restricting call and or messaging capabilities or the like. The application is typically configured to record the current speed of the smartphone 105, ideally at regular intervals, using the GPS module and/or accelerometer of the smartphone 105. If the smartphone 105 is removed from the holder 103, i.e. removed from the pre-determined range of the initialisation means 103, whilst the vehicle is in transit, then the application is configured to cause the smartphone to communicate with the monitoring device 7, wherein the communication may include situational and/or locational details of the smartphone 105, such as the time it was removed from the holder 103, and/or the speed at which the vehicle was travelling when the smartphone was removed from the holder 103. If however the smartphone 105 is removed from the holder 103 whilst the vehicle is stationary the one or more pre-determined conditions (i.e. speed or acceleration) will not be fulfilled and no communication will typically be sent from the mobile communication device 105 to the monitoring device 7. Advantageously, this arrangement would be particularly useful for haulage, taxi or other vehicle related industries were employee's use of their mobile communications devices during their hours or work could be monitored and/or restricted thereby ensuring that employers are taking an active step in ensuring drivers are in compliance with relevant national laws.

In an optional embodiment (not shown) the initialisation means 103 and/or mobile communication device 105 may be configured such that the controller, comprising the pre-installed application on the mobile communication device 105, is configured to initialise when the mobile communication device 105 is within range of the initialisation means and when the mobile communication device 105 is passed over the initialisation means 103, typically comprising the NFC module, along a pre-determined path relative to the initialisation means 103. For example where the initialisation means 103 is located on a surface such as a desk or table or the like in-use, an x-axis will extend parallel to the surface on which the initialisation means 103 is located; a y-axis will extend perpendicular to the x-axis; and a z-axis will extend perpendicular to both of the x and y-axis. The mobile communication device 103 may be configured such that the mobile communication device 103 must trace the pre-determined path relative to the initialisation means 103 before the controller (i.e. the pre-installed application) will initialise on the mobile communication device 105. The pre-determined path may comprise a linear trajectory along one of the x, y or x axis or a combination of one or more trajectories (either linear or convoluted) along one or more of the x, y or z-axis. It should be understood that the term "passed over" is intended to include were the mobile communication device 105 may be passed over the initialisation means 103 with a gap therebetween or where there is no gap between the mobile communication device 105 and the initialisation means 103 such that at least part of the mobile communication device 105 is in contact with the initialisation means 103.

Alternative embodiments (not shown) are envisaged, for example an office environment. In this embodiment, in-use, the initialisation means 3, 103 may be located upon one or more desks within the office. An employee upon beginning work may be required to place their mobile communications device 5, 105 e.g. smartphone upon or near the initialisation means 3, 103. Upon establishing wireless communication with the initialisation means 3, 103 the pre-installed application would initialise. Upon initialisation the application may include instructions for the mobile communication device 5, 105 to communicate with the monitoring device 7 to verify and/or update the pre-determined conditions. The application may be configured such as to disable calling or messaging features of the mobile communications device. In an office environment the pre-determined conditions may preferably comprise a time range e.g. 9am to 5pm such that if the employee removes their mobile communications device 5, 105 from within the range of the initialisation means 3, 103 within this time range the application is configured to cause the mobile communications device 5, 105 to communicate with the monitoring device 7, wherein communicate may comprise sending a message by GSM, LTE Wi-Fi or the like, wherein said message may include the time at which the mobile communication device exited the range of the initialisation means 3, 103. The monitoring device 7 in this office environment typically comprises a line manager's smartphone, personal computer or tablet.

A further embodiment could be a home environment where a parent has the initialisation means 3 located on a kitchen table or the like. Other embodiments could include hospital environments, airports or any environments were it is desired for the use of mobile phone features to be restricted.

A second aspect of the invention provides a method for monitoring the usage of a mobile communication device, the method comprising the steps of:
Detecting the presence, by the mobile communication device, of an initialisation means when the mobile communication device comes within range of the initialisation means;
Activating a controller for controlling one or more features of the mobile communication device when the initialisation means is detected by the mobile communication device;
Determining, by the mobile communication device, whether one or more conditions are met when the mobile communication device is removed from within the range of the initialisation means; and
Communicating with a monitoring means when the mobile communication device is removed from within the range of the initialisation means and the one or more conditions are met.

Features of the first aspect of the invention are equally applicable to the second aspect.

## Claims

1. A system for monitoring the usage of a mobile communication device (1), the system comprising:
Initialisation means (3);
Monitoring means (7);
A controller for controlling one or more features of the mobile communication device (5);
Wherein the mobile communication device (5) is configured to:
Detect the presence of the initialisation means (3) when the mobile communication device (1) is within range of the initialisation means (3);
Activate the controller when the initialisation means (3) is detected by the mobile communication device (1);
Determine whether one or more conditions are met when the mobile communication device (1) is removed from within the range of the initialisation means (3); and
Communicate with the monitoring means (7) when the mobile communication device (5) is removed from within the range of the initialisation means and the one or more conditions are met;
wherein the mobile communications device (5) is configured to determine if the one or more conditions are met using a measurement obtained by one or more sensors of the mobile communication device (5); and
wherein the initialisation means (3) comprises a holder (103) which is shaped and dimensioned to receive and retain the mobile communication device.

2. The system as claimed in claim 1, wherein controlling the one or more features of the mobile communication device (5) comprises enabling, disabling or restricting one or more of the features.

3. The system as claimed in any preceding claim, wherein the one or more features comprise one or more hardware and/or software features.

4. The system as claimed in any preceding claim, wherein the mobile communication device (5) is configured to detect the presence of the initialisation (3) means using a wireless communication means.

5. The system a claimed in claim 4, wherein the wireless communication means comprises NFC, Bluetooth^{®}, Wi-Fi^{®} or any other suitable communication means.

6. The system as claimed in claim 1, wherein the one or more measurements comprise location, time, speed, acceleration or any other suitable measurement.

7. The system as claimed in claim 1, wherein the holder (103) comprises a NFC module for communicating with the mobile communication device when it is retained therein.

8. The system as claimed in claim 1 or 7, wherein the holder (103) is shaped such that when a mobile communications device is received and retained therein in-use, one or more buttons of the mobile communications device are covered by one or more walls of the holder; and/or wherein the holder (103) comprises first and second side walls and a base wall which are operable to cover at least part of the front and/or sides of the mobile communication device when it is retained in the holder.

9. The system as claimed in any preceding claim, wherein the mobile communication device (5) is configured to communicate with the monitoring means by a wireless communication means; and/or wherein the wireless communication means comprises Wi-Fi^{®}, Bluetooth^{®} or GSM or any other suitable wireless communication means; and/or wherein the mobile communication device (5) comprises a smartphone; and/or wherein the monitoring means (7) comprises a mobile communication device.

10. The system as claimed in any preceding claim, wherein the controller comprises a pre-installed application which is stored on the mobile communication device.

11. The system as claimed in claim 10, wherein the pre-installed application comprises instructions configured to control one or more features of the mobile communication device.

12. The system as claimed in claim 10 or 11, wherein the pre-installed application is configured to communicate with the monitoring device to obtain and/or modify the instructions in-use.

13. The system as claimed in any preceding claim, wherein the mobile communication device (5) is further configured to activate the controller only when the mobile communication device adopts a pre-determined path relative to the initialisation means.

14. The system as claimed in claim 13, wherein the pre-determined path comprises a linear and/or convoluted path relative to the initialisation means.

15. A method for monitoring the usage of a mobile communication device, the method comprising the steps of:
Detecting the presence, by the mobile communication device, of an initialisation means when the mobile communication device comes within range of the initialisation means, wherein the initialisation means comprises a holder which is shaped and dimensioned to receive and retain the mobile communication device;
Activating a controller for controlling one or more features of the mobile communication device when the initialisation means is detected by the mobile communication device;
Determining, by the mobile communication device, whether one or more conditions are met when the mobile communication device is removed from within the range of the initialisation means, wherein the mobile communications device is configured to determine if the one or more conditions are met using a measurement obtained by one or more sensors of the mobile communication device; and
Communicating with a monitoring means when the mobile communication device is removed from within the range of the initialisation means and the one or more conditions are met.

## Patentansprüche

1. System zur Überwachung der Nutzung einer mobilen Kommunikationsvorrichtung (1), wobei das System Folgendes umfasst:
Initialisierungsmittel (3);
Überwachungsmittel (7);
einen Controller zum Steuern eines oder mehrerer Merkmale der mobilen Kommunikationsvorrichtung (5);
wobei die mobile Kommunikationsvorrichtung (5) konfiguriert ist zum:
Erfassen des Vorhandenseins des Initialisierungsmittels (3), wenn sich die mobile Kommunikationsvorrichtung (1) in Reichweite des Initialisierungsmittels (3) befindet;
Aktivieren des Controllers, wenn das Initialisierungsmittel (3) durch die mobile Kommunikationsvorrichtung (1) erfasst wird;
Bestimmen, ob eine oder mehrere Bedingungen erfüllt sind, wenn die mobile Kommunikationsvorrichtung (1) aus der Reichweite des Initialisierungsmittels (3) entfernt wird; und
Kommunizieren mit dem Überwachungsmittel (7), wenn die mobile Kommunikationsvorrichtung (5) aus der Reichweite des Initialisierungsmittels entfernt wird und die eine oder mehreren Bedingungen erfüllt sind;
wobei die mobile Kommunikationsvorrichtung (5) konfiguriert ist, um zu bestimmen, ob die eine oder mehreren Bedingungen erfüllt sind, unter Nutzung einer Messung, die durch einen oder mehrere Sensoren der mobilen Kommunikationsvorrichtung (5) erhalten wurde; und
wobei das Initialisierungsmittel (3) eine Halterung (103) umfasst, die so geformt und bemessen ist, dass sie die mobile Kommunikationsvorrichtung aufnimmt und hält.

2. System nach Anspruch 1, wobei das Steuern des einen oder der mehreren Merkmale der mobilen Kommunikationsvorrichtung (5) das Aktivieren, Deaktivieren oder Einschränken eines oder mehrerer der Merkmale umfasst.

3. System nach einem der vorhergehenden Ansprüche, wobei das eine oder die mehreren Merkmale ein oder mehrere Hardware- und/oder Softwaremerkmale umfassen.

4. System nach einem der vorhergehenden Ansprüche, wobei die mobile Kommunikationsvorrichtung (5) so konfiguriert ist, dass sie das Vorhandensein des Initialisierungsmittels (3) unter Nutzung eines drahtlosen Kommunikationsmittels erfasst.

5. System nach Anspruch 4, wobei das drahtlose Kommunikationsmittel NFC, Bluetooth^{®}, Wi-Fi^{®} oder jedes andere geeignete Kommunikationsmittel umfasst.

6. System nach Anspruch 1, wobei die eine oder mehreren Messungen Ort, Zeit, Geschwindigkeit, Beschleunigung oder jede andere geeignete Messung umfassen.

7. System nach Anspruch 1, wobei die Halterung (103) ein NFC-Modul umfasst, um mit der mobilen Kommunikationsvorrichtung zu kommunizieren, wenn sie darin gehalten wird.

8. System nach Anspruch 1 oder 7, wobei die Halterung (103) so geformt ist, dass, wenn eine mobile Kommunikationsvorrichtung aufgenommen ist und darin während der Verwendung gehalten wird, eine oder mehrere Tasten der mobilen Kommunikationsvorrichtung durch eine oder mehrere Wände der Halterung abgedeckt sind; und/oder wobei die Halterung (103) erste und zweite Seitenwände und eine Bodenwand umfasst, die bedienbar sind, um mindestens einen Teil der Vorderseite und/oder der Seiten der mobilen Kommunikationsvorrichtung abzudecken, wenn sie in der Halterung gehalten wird.

9. System nach einem der vorhergehenden Ansprüche, wobei die mobile Kommunikationsvorrichtung (5) so konfiguriert ist, dass sie mit dem Überwachungsmittel über ein drahtloses Kommunikationsmittel kommuniziert; und/oder wobei das drahtlose Kommunikationsmittel Wi-Fi^{®}, Bluetooth^{®} oder GSM oder ein anderes geeignetes drahtloses Kommunikationsmittel umfasst; und/oder wobei die mobile Kommunikationsvorrichtung (5) ein Smartphone umfasst; und/oder wobei das Überwachungsmittel (7) eine mobile Kommunikationsvorrichtung umfasst.

10. System nach einem der vorhergehenden Ansprüche, wobei der Controller eine vorinstallierte Anwendung umfasst, die auf der mobilen Kommunikationsvorrichtung gespeichert ist.

11. System nach Anspruch 10, wobei die vorinstallierte Anwendung Anweisungen umfasst, die zum Steuern eines oder mehrerer Merkmale der mobilen Kommunikationsvorrichtung konfiguriert sind.

12. System nach Anspruch 10 oder 11, wobei die vorinstallierte Anwendung so konfiguriert ist, dass sie mit der Überwachungsvorrichtung kommuniziert, um die Anweisungen während der Verwendung zu erhalten und/oder zu modifizieren.

13. System nach einem der vorhergehenden Ansprüche, wobei die mobile Kommunikationsvorrichtung (5) ferner so konfiguriert ist, dass sie den Controller nur dann aktiviert, wenn die mobile Kommunikationsvorrichtung einen vorbestimmten Pfad relativ zum Initialisierungsmittel übernimmt.

14. System nach Anspruch 13, wobei der vorbestimmte Pfad einen linearen und/oder gewundenen Pfad relativ zum Initialisierungsmittel umfasst.

15. Verfahren zum Überwachen der Nutzung einer mobilen Kommunikationsvorrichtung, wobei das Verfahren die folgenden Schritte umfasst:
Erfassen des Vorhandenseins eines Initialisierungsmittels durch die mobile Kommunikationsvorrichtung, wenn die mobile Kommunikationsvorrichtung in Reichweite des Initialisierungsmittels gelangt, wobei das Initialisierungsmittel eine Halterung umfasst, die so geformt und bemessen ist, dass sie die mobile Kommunikationsvorrichtung aufnimmt und hält;
Aktivieren eines Controllers zum Steuern eines oder mehrerer Merkmale der mobilen Kommunikationsvorrichtung, wenn das Initialisierungsmittel durch die mobile Kommunikationsvorrichtung erfasst wird;
Bestimmen, durch die mobile Kommunikationsvorrichtung, ob eine oder mehrere Bedingungen erfüllt sind, wenn die mobile Kommunikationsvorrichtung aus der Reichweite des Initialisierungsmittels entfernt wird, wobei die mobile Kommunikationsvorrichtung so konfiguriert ist, dass sie unter Nutzung einer Messung, die durch einen oder mehrere Sensoren der mobilen Kommunikationsvorrichtung erhalten wurde, bestimmt, ob die eine oder mehreren Bedingungen erfüllt sind; und
Kommunizieren mit einem Überwachungsmittel, wenn die mobile Kommunikationsvorrichtung aus der Reichweite des Initialisierungsmittels entfernt wird und die eine oder mehreren Bedingungen erfüllt sind.

## Revendications

1. Système pour la surveillance de l'utilisation d'un dispositif de communication mobile (1), le système comprenant :
un moyen d'initialisation (3) ;
un moyen de surveillance (7) ;
un dispositif de commande pour la commande d'une ou de plusieurs fonctionnalités du dispositif de communication mobile (5) ;
dans lequel le dispositif de communication mobile (5) est conçu pour :
détecter la présence du moyen d'initialisation (3) lorsque le dispositif de communication mobile (1) est à portée du moyen d'initialisation (3) ;
activer le dispositif de commande lorsque le moyen d'initialisation (3) est détecté par le dispositif de communication mobile (1) ;
déterminer si une ou plusieurs conditions sont satisfaites lorsque le dispositif de communication mobile (1) est retiré de la portée du moyen d'initialisation (3) ; et
communiquer avec le moyen de surveillance (7) lorsque le dispositif de communication mobile (5) est retiré de la portée du moyen d'initialisation et les une ou plusieurs conditions sont satisfaites ;
dans lequel le dispositif de communication mobile (5) est conçu pour déterminer si les une ou plusieurs conditions sont satisfaites à l'aide d'une mesure obtenue par un ou plusieurs capteurs du dispositif de communication mobile (5) ; et
dans lequel le moyen d'initialisation (3) comprend un support (103) qui est façonné et dimensionné pour recevoir et retenir le dispositif de communication mobile.

2. Système selon la revendication 1, dans lequel la commande des une ou plusieurs fonctionnalités du dispositif de communication mobile (5) comprend l'activation, la désactivation ou la restriction d'une ou de plusieurs des fonctionnalités.

3. Système selon une quelconque revendication précédente, dans lequel les un ou plusieurs fonctionnalités comprennent une ou plusieurs fonctionnalités matérielles et/ou logicielles.

4. Système selon une quelconque revendication précédente, dans lequel le dispositif de communication mobile (5) est conçu pour détecter la présence du moyen d'initialisation (3) à l'aide d'un moyen de communication sans fil.

5. Système selon la revendication 4, dans lequel le moyen de communication sans fil comprend un moyen de communication par communication en champ proche, NFC, Bluetooth^{®}, Wi-Fi^{®} ou un quelconque autre moyen de communication approprié.

6. Système selon la revendication 1, dans lequel les une ou plusieurs mesures comprennent un emplacement, un temps, une vitesse, une accélération ou une quelconque autre mesure appropriée.

7. Système selon la revendication 1, dans lequel le support (103) comprend un module de NFC pour une communication avec le dispositif de communication mobile lorsqu'il est retenu dans celui-ci.

8. Système selon la revendication 1 ou 7, dans lequel le support (103) est façonné de sorte que, lorsqu'un dispositif de communication mobile est reçu et retenu dans celui-ci en utilisation, un ou plusieurs boutons du dispositif de communication mobile soient recouverts par une ou plusieurs parois du support ; et/ou dans lequel le support (103) comprend des première et seconde parois latérales et une paroi de base qui ont pour fonction de recouvrir au moins une partie de l'avant et/ou des côtés du dispositif de communication mobile lorsqu'il est retenu dans le support.

9. Système selon une quelconque revendication précédente, dans lequel le dispositif de communication mobile (5) est conçu pour communiquer avec le moyen de surveillance par un moyen de communication sans fil ; et/ou dans lequel le moyen de communication sans fil comprend un moyen de communication par Wi-Fi^{®}, Bluetooth^{®} ou système mondial de communications mobiles, GSM, ou un quelconque autre moyen de communication sans fil approprié ; et/ou dans lequel le dispositif de communication mobile (5) comprend un téléphone intelligent ; et/ou dans lequel le moyen de surveillance (7) comprend un dispositif de communication mobile.

10. Système selon une quelconque revendication précédente, dans lequel le dispositif de commande comprend une application préinstallée qui est stockée sur le dispositif de communication mobile.

11. Système selon la revendication 10, dans lequel l'application préinstallée comprend des instructions conçues pour commander une ou plusieurs fonctionnalités du dispositif de communication mobile.

12. Système selon la revendication 10 ou 11, dans lequel l'application préinstallée est conçue pour communiquer avec le dispositif de surveillance pour obtenir et/ou modifier les instructions en utilisation.

13. Système selon une quelconque revendication précédente, dans lequel le dispositif de communication mobile (5) est en outre conçu pour activer le dispositif de commande uniquement lorsque le dispositif de communication mobile adopte un parcours prédéterminé par rapport au moyen d'initialisation.

14. Système selon la revendication 13, dans lequel le parcours prédéterminé comprend un parcours linéaire et/ou complexe par rapport au moyen d'initialisation.

15. Procédé pour la surveillance de l'utilisation d'un dispositif de communication mobile, le procédé comprenant les étapes de :
la détection de la présence, par le dispositif de communication mobile, d'un moyen d'initialisation lorsque le dispositif de communication mobile vient à portée du moyen d'initialisation, dans lequel le moyen d'initialisation comprend un support qui est façonné et dimensionné pour recevoir et retenir le dispositif de communication mobile ;
l'activation d'un dispositif de commande pour la commande d'une ou de plusieurs fonctionnalités du dispositif de communication mobile lorsque le moyen d'initialisation est détecté par le dispositif de communication mobile ;
la détermination, par le dispositif de communication mobile, de si une ou plusieurs conditions sont satisfaites lorsque le dispositif de communication mobile est retiré de la portée du moyen d'initialisation, dans lequel le dispositif de communication mobile est conçu pour déterminer si les une ou
plusieurs conditions sont satisfaites à l'aide d'une mesure obtenue par un ou plusieurs capteurs du dispositif de communication mobile ; et
la communication avec un moyen de surveillance lorsque le dispositif de communication mobile est retiré de la portée du moyen d'initialisation et les une ou plusieurs conditions sont satisfaites.
